Europäisches Patentamt

European Patent Office

Office européen des brevets

(11) Publication number: **0 159 575**
**B1**

## (12) EUROPEAN PATENT SPECIFICATION

(45) Date of publication of patent specification: 07.09.88 (51) Int. Cl.⁴: **G 02 B 6/44**

(21) Application number: **85103821.6**

(22) Date of filing: **29.03.85**

(54) Waterproof cable and method of production thereof.

(30) Priority:. 29.03.84 JP 59571/84

(43) Date of publication of application:
**30.10.85 Bulletin 85/44**

(45) Publication of the grant of the patent:
**07.09.88 Bulletin 88/36**

(84) Designated Contracting States:
**BE DE FR GB**

(56) References cited:
**EP-A-0 026 952**
**DE-A-3 225 228**
**GB-A-2 041 565**
**GB-A-2 052 092**
**GB-A-2 082 790**
**US-A-4 401 366**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Saito, Yasunori c/o Yokohama Works Sumitomo Electric Industries, Ltd. 1, Taya-cho Totsuka-ku Yokohama-shi Kanagawa (JP)**
Inventor: **Ichikawa, Osamu c/o Yokohama Works Sumitomo Electric Industries, Ltd. 1, Taya-cho Totsuka-ku Yokohama-shi Kanagawa (JP)**
Inventor: **Oshima, Toshio c/o Yokohama Works Sumitomo Electric Industries, Ltd. 1, Taya-cho Totsuka-ku Yokohama-shi Kanagawa (JP)**

(74) Representative: **Lehn, Werner, Dipl.-Ing. et al Hoffmann, Eitle & Partner Patentanwälte Arabellastrasse 4 D-8000 München 81 (DE)**

EP 0 159 575 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a waterproof optical fibre cable for use in a communication system and to a method of manufacturing such a cable.

GB—A—2 082 790 disclose a waterproof optical fibre cable for use in a communication system, comprising: an elongate spacer member having at least one longitudinally extending groove formed in the outer surface thereof; optical fibre means loosely housed in said groove; a dampproof jelly material provided in said groove; and means for covering said spacer member.

When an optical fibre cable is laid as a submarine cable, the cable is usually subjected to tensile stress by the water pressure. In order to prevent the optical fibres of the cable from being unduly stretched by the tensile stress, the optical fibre cable is provided with a core or spacer with a plurality of grooves extending generally in the lengthwise direction of the cable and the optical fibres are loosely fitted in said grooves in the process of manufacturing of the cable so that the optical fibres are not stretched even if the spacer is expanded by the tensile stress due to the water pressure at the time of and after laying of the cable. In the optical fibre cable of the above type, the respective grooves of the spacer are filled up with a dampproof or humidityproof filler surrounding the optical fibres without gap for preventing hydrotaxis (penetration of water) along the grooves. As the dampproof filler, conventionally powder fillers (US—A—4 401 366) or jelly fillers are used. The powder filler serves to prevent the hydrotaxis but cannot serve to prevent water penetration. On the other hand, the jelly filler is superior in preventing water penetration.

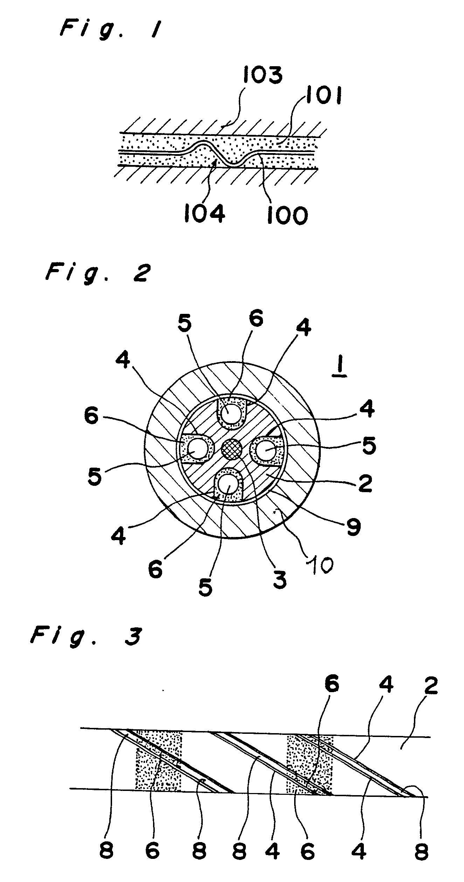

However, the distribution of jelly filler in the conventional optical fibre cable has the disadvantage of causing the optical fibres to curl locally, so-called micro bending. More specifically, when the optical fibre cable is subjected to tensile stress, the optical fibres are strongly stretched with extension of the spacer and in turn upon removing the tensile stress, the spacer recovers to its original length. Recovering of the spacer allows the optical fibres to recover their original loose state. However, as shown in Fig. 1 of the accompanying drawings, the optical fibre 100 can not fully recover due to large resistance between the jelly filler 101 and the complete covering of the spacer 103, whereby local micro bending 104 occurs.

The micro bending of the optical fibres causes reduced life of the optical fibres due to the bending stress, and also increases transmission loss.

There are other known types of optical fibre cables, one of which is filled with grease as the dampproof filler, another of which is provided with a waterproofing plug as disclosed in Japanese Patent Publication (unexamined) JP—A—6206/1981. They cannot solve the problem of micro bending of the optical fibre as mentioned above.

Another prior art optical fibre cable is disclosed in Japanese Patent Publication (unexamined) JP—A—62207/1981 in which the optical fibres in the grooves are secured to the spacer at predetermined intervals. The optical cable disclosed in JP—A—62207/1981 is intended to prevent movement of the optical fibres in the longitudinal direction. Therefore in the event that local tensile stress or deformation is applied to the optical fibres, the optical fibres are subjected to excessive expansion or deformation at locations subjected to the tensile stress since the optical fibres cannot be displaced.

Furthermore, GB—A—2 041 565 discloses a waterproof optical cable provided with portions filled with a viscous material alternating with air gaps. However, the cable structure is quite different from the type discussed in this specification and includes no spacer member.

An object of the present invention is to provide an optical fibre cable of the type having a grooved spacer for use in a communication system for preventing concentration of slack and micro bending of the optical fibres as well as preventing hydrotaxis in the optical fibre cable.

Another object of the present invention is to provide a waterproof optical fibre cable in which change of the transmission loss against the slack of the optical fibre is small.

According to one aspect of the present invention, there is provided a waterproof optical fibre cable for use in a communication system, comprising: an elongate spacer member having at least one longitudinally extending groove formed in the outer surface thereof; optical fibre means loosely housed in said groove; a dampproof jelly material provided in said groove; and means for covering said spacer member, characterised in that said dampproof jelly material fills said groove, and coats the peripheral surface of said spacer member at predetermined intervals along the longtudinal direction of the spacer member so as to form a plurality of jelly-filled portions alternating with a plurality of unfilled portions, and in that said covering means is adapted so as to cover at least the outer surface of the filled portions without forming any gap therebetween.

According to another aspect of the present invention, there is provided a method of manufacturing a waterproof optical fibre cable as above defined, comprising: longitudinally moving an elongate spacer member having at least one longitudinally extending groove formed in the outer surface thereof; laying optical fibre means in said groove; filling said groove and coating the peripheral surface of the spacer member with a dampproof jelly material in a repetitive discontinuous manner in synchronism with the movement of the spacer member, so as to form a plurality of jelly-filled portions alternating with a plurality of unfilled portions; and covering at least said portions filled with dampproof jelly material.

For a better understanding of the invention, and to show how the same may be carried into effect, reference will now be made, by way of example, to the accompanying drawings, in which:

Fig. 1 is a lateral cross-sectional view showing one example of local bending occurring in a conventional optical fibre cable;

Fig. 2 is a cross-sectional view of an embodiment of an optical fibre cable according to the present invention taken across a section where filler is provided;

Fig. 3 is a side view of the optical fibre cable shown in Fig. 2 with an outer protection sheath uncovered;

Fig. 4 is a general side elevation of one example of an apparatus for manufacturing waterproof communication cables; and

Fig. 5 is a graph showing the change of the transmission loss against the amount of slack of the optical fibre.

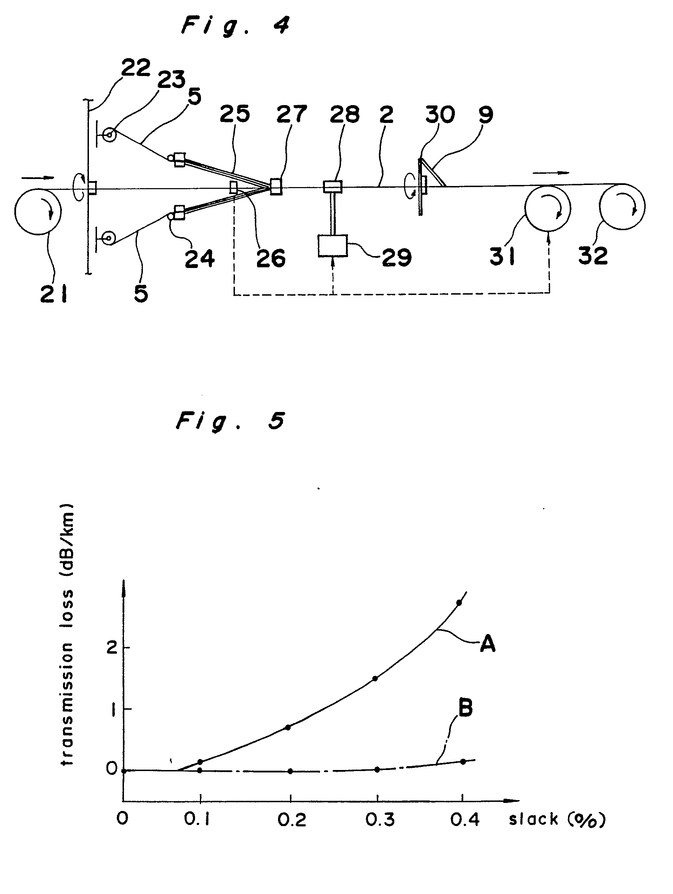

Referring to Figs. 2 and 3, an optical fibre cable 1 according to one embodiment of the present invention comprises an elongate spacer 2 made of polyethylene resin material having a generally round shape in cross-section and a reinforcing member 3 having a high tensile strength and made of FRP (glass fibre reinforced plastic) material extending in the center portion of the spacer 2 for reinforcement thereof. Four grooves 4 are symmetrically provided on the outer peripheral surface portion of the spacer 2, the grooves 4 extending parallel to each other, and helically along the spacer 2. Optical fibres 5 are fitted into and accommodated in the respective grooves 4 with a uniform looseness. A plurality of filled portions 6 are formed by filling each of the grooves 4 with jelly polybutene material and coating around the outer surface of the spacer 2. Said filled portions 6 are formed discontinuously but aligned in the longitudinal direction of the spacer 2 at suitable intervals so as to form filled portions 6 and unfilled portions 8 alternately.

The spacer 2 into which the optical fibres 5 and the filled portions 6 are put, as mentioned above, is covered continuously with a cover 9 formed by winding non-woven strips therearound without a gap for preventing separation of the optical fibres 5 and the filled portions 6 from the spacer 2. An outer cover sheath 10 made of polyethylene is formed around the cover 9 for protecting the optical fibre cable 1.

As the jelly material for the filled portions 6, various kinds of materials may be used provided the material can serve to prevent hydrotaxis. For example, flex gell, oil jelly, polybutene jelly or petroleum jelly may be used as the filler material. In the event that the flowability of the jelly material increases in a given temperature range, it is preferred to use a filler material such that its flowability is low in the temperature range in which the optical cable is used, in order to suppress the flow of the jelly material.

One way of eliminating air gaps in the filled portions 6 is to form the cover layer 9 by winding a tape made of porous material in a pressed manner so that jelly material of the filled portions 6 is sunk or impregnated into the tape. Another way of eliminating air gaps in the filled portions 6 is to form additional layers of filling of jelly on both surfaces of the cover winding 9.

In one modification, dampproof powder mixture may be filled in each space 8 between the filled portions 6 so as to provide an optical fibre cable having a completely filled configuration, so that the waterproof perforance of the optical fibre cable is better than that of the conventional optical fibre cable. The completely filled configuration of the conventional optical fibre cable has the disadvantage that the density of the filler tends to be non uniform with respect to the longitudinal direction of the cable due to vibration at the time of transportation and laying of the cable, so that the waterproof performance of the cable differs from position to position with respect to the longitudinal direction of the cable.

In contrast, the above-mentioned modification of the present invention, the dampproof powder mixture 7 is confined by the jelly of the filled portions 6, whereby the dampproof powder mixture can be prevented from displacement, so that uniform distribution of the filler can be ensured.

An example of the process of anufacturing the waterproof optical fibre cable of the invention will be explained with reference to Fig. 4. The spacer 2 is released from a supply bobbin 21 with a constant tension, subsequently passing through the center hole of a rotational cage 22. The optical fibres 5 are released from respective reels 23 secured to the rotational cage 22, being guided towards guide tubes 25 by respective feeding machines 24 without tension. The optical fibres 5 fed to the guide tubes 25 are respectively laid in the grooves 4 of the spacer 2 by a die assembly 27. The feed speed of the spacer 2 is sensed by a speed sensor 26. Jelly material is fed to the spacer 2 at a position behind the die assembly 27 by means of a jelly coating die 28 which is fed with the jelly material from a jelly feeding machine 29 controlled by the output signal of the speed sensor 26 so that the jelly material is filled in the grooves 4 and coated on the peripheral surface of the spacer 2 to form the filled portions 6 at suitable intervals as shown in Fig. 3. Subsequently, tapes are wound around the spacer 2 in a helical shape pressing the spacer 2 and the filled portions 6 with a predetermined pressure by a tape winding machine 30 to provide the cover winding 9. The optical fibre cable thus formed is passed over a capstan 31 and in turn taken up by a take up bobbin 32. The tension applied to each optical fibre 5 and the tension applied to the spacer 2 are determined so that the length of the optical fibre 5 is higher than the length of the groove 4 by either making the supplying tension of the spacer large or making the feeding tension of the optical fibre 5 negative. The amount of jelly fed to the spacer 2 and the length of the intervals between the filled portions 6 are respectively defined according to the slack required for the optical fibres at the time of laying the optical cable and the required waterproof performance.

In the case of the interval between two adjacent filled portions 6 being short, in order to avoid concentration of the local bending of the optical fibre, it is desired to make each filled portion 6 as narrow as possible. It is also advantageous to coat jelly material onto the cover winding 9 for suppressing hydrotaxis within the region of the unfilled portions 8.

It will be appreciated that in the waterproof cable as mentioned above, since adhesive material is not used for securing the optical fibres 5, it can effectively be avoided that the optical fibres 5 are subjected to excessive stress even if a local tension stress is applied to the optical fibres.

Referring to Fig. 5, the curve B shows the characteristic of the transmission loss against the amount of slack of the optical fibres occurring in a waterproof optical fibre cable according to the present invention produced by the method as mentioned above. The curve A shows the characteristic of a conventional cable having the same configuration as the cable of the present invention except that the spacer is continuously filled with the dampproof powder mixture without forming unfilled portions 8. As apparent from the characteristic curves shown in Fig. 5, in the conventional cable, the greater the slack of the optical fibres, the greater the amount of the transmission loss. In contrast, in the optical fibre cable according to the present invention, the transmission loss can be kept small even if the slack of the optical fibres increases. It will be understood that provision of the unfilled portions 8 is effective for suppressing increment of the transmission loss. The optical fibre used in the example of Fig. 5 was a quartz system optical fibre with a difference in the refractive indices of 1%, core diameter 30 micrometres, clad diameter 125 micrometres, finished by coating silicon resin to produce a finished diameter of 0.4 millimetres. The supply tension was about zero gram. The interval between two adjacent grooves of the spacer was 150 millimetres and the width of each groove was 1 millimetre with a depth of 1 millimetre. The width of the filled portions 6 was 100 millimetres and the width of the unfilled portions 8 was 500 millimetres. The amount (%) of the slack in the optical fibres shown in Fig. 5 represents the excessive length of the optical fibres against the length of spacer.

## Claims

1. A waterproof optical fibre cable (1) for use in a communication system, comprising: an elongate spacer member (2) having at least one longitudinally extending groove (4) formed in the outer surface thereof; optical fibre means (5) loosely housed in said groove; a dampproof jelly material provided in said groove; and means (9) for covering said spacer member, characterised in that said dampproof jelly material fills said groove, and coats the peripheral surface of said spacer member at predetermined intervals along the longitudinal direction of the spacer member

so as to form a plurality of jelly-filled portions (6) alternating with a plurality of unfilled portions (8), and in that said covering means (9) is adapted so as to cover at least the outer surface of the filled portions without forming any gap therebetween.

2. A waterproof optical fibre cable according to Claim 1, wherein said portions (8) not filled with jelly material are filled with a dampproof powder material.

3. A waterproof optical fibre cable according to claim 1 or 2 wherein said spacer member (2) is reinforced by a reinforcing strip (3) extending in the center portion of the spacer member (2).

4. A waterproof optical fibre cable according to claim 1, 2 or 3 wherein said spacer member (2) is formed with a plurality of grooves (4) extending helically along the spacer member (2).

5. A waterproof optical fibre cable according to any one of claims 1 to 4 wherein said covering means (9) is formed by winding tape means around the outer surface of the spacer member (2) through said filled portions (6).

6. A waterproof optical fibre cable according to any one of claims 1 to 5 wherein the covering means (9) is formed over the total length of the spacer member (2).

7. A waterproof optical fibre cable according to claim 6 wherein both side faces of the covering means (9) are provided with the dampproof jelly material.

8. A method of manufacturing a waterproof optical fibre cable (1) according to Claim 1, comprising: longitudinally moving an elongate spacer member (2) having at least one longitudinally extending groove (4) formed in the outer surface thereof; laying optical fibre means (5) in said groove; filling said groove and coating the peripheral surface of the spacer member with a dampproof jelly material in a repetitive discontinuous manner in synchronism with the movement of the spacer member, so as to form a plurality of jelly-filled portions alternating with a plurality of unfilled portions; and covering at least said portions filled with dampproof jelly material.

## Patentansprüche

1. Wasserdichtes optisches Faserkabel (1) für die Verwendung in einem Kommunikationssystem mit einem langgestreckten Abstandshalterelement (2) mit zumindest einer längs verlaufenden Kerbe (4), die in der äußeren Oberfläche davon ausgebildet ist, mit optischen Fasermitteln (5), die lose in die Kerbe eingelegt sind, mit einem vor Nässe schützendem Gallertmaterial, das in der Kerbe vorgesehen ist, und mit Mitteln (9) für die Umhüllung des Abstandshalterelements, dadurch gekennzeichnet, daß das vor Nässe schützende Gallertmaterial die Kerbe ausfüllt und die Umfangsoberfläche des Abstandshalterelements in festgelegten Intervallen in Längsrichtung des Abstandshalterelements so bedeckt, daß eine Vielzahl von gallertgefüllten Bereichen (6) gebildet werden, die sich mit einer Vielzahl von ungefüllten Bereichen (8) abwechselen, und daß die Umhüllungsmittel (9) dafür vorgesehen sind, zumindest die äußere Oberfläche der ausgefüllten Bereiche zu umhüllen, ohne daß ein Spalt dazwischen gebildet wird.

2. Wasserdichtes optisches Faserkabel nach Anspruch 1, dadurch gekennzeichnet, daß die Bereiche (8), die nicht mit dem Gallertmaterial gefüllt sind, mit einem vor Nässe schützendem Pulvermaterial gefüllt sind.

3. Wasserdichtes optisches Faserkabel nach Anspruch 1 oder 2, dadurch gekennzeichnet, daß das Abstandshalterelement (2) durch eine Verstärkungsprofil (3) verstärkt ist, das sich im Mittelbereich des Abstandshalterelements (2) erstreckt.

4. Wasserdichtes optischès Faserkabel nach Anspruch 1, 2 oder 3, dadurch gekennzeichnet, daß das Abstandshalterelement (2) mit einer Vielzahl von Kerben (4) ausgebildet ist, die sich am Abstandshalterelement (2) spiralartig erstrecken.

5. Wasserdichtes optisches Faserkabel nach einem der Ansprüche 1 bis 4, dadurch gekennzeichnet, daß die Umhüllungsmittel (9) durch Aufwickeln eines Bandes um die äußere Oberfläche des Abstandshalteelements (2) über die gefüllten Bereiche (6) hinweg gebildet werden.

6. Wasserdichtes optisches Faserkabel nach einem der Ansprüche 1 bis 5, dadurch gekennzeichnet, daß die Umfüllungsmittel (9) über die gesamte Länge des Abstandshalterelements (2) ausgebildet sind.

7. Wasserdichtes optisches Faserkabel nach Anspruch 6, dadurch gekennzeichnet, daß beide Oberflächen der Umhüllungsmittel (9) mit einem vor Nässe schützenden Gallertmaterial ausgestattet sind.

8. Verfahren zur Herstellung eines wasserdichten optischen Faserkabels (1) nach Anspruch 1 mit: Längsgerichtetem Bewegen eines langgestreckten Abstandshalterelements (2) mit zumindest einer längs verlaufenden Kerbe (4), die in der äußeren Oberfläche davon ausgebildet ist; Einlegen von optischen Fasermitteln (5) in die Kerbe; Füllen der Kerbe und Bedecken der Umfangsoberfläche des Abstandshalterelements mit einem vor Nässe schützendem Gallertmaterial in sich wiederholender nicht kontinuierlicher Art und Weise, synchron mit der Bewegung des Abstandshalterelements, um so eine Vielzahl von gallertgefüllten Bereichen zu bilden, die sich mit einer Vielzahl von ungefüllten Bereichen abwechseln; und Umhüllen von zumindest den mit vor Nässe schützendem Gallertmaterial gefüllten Bereichen.

**Revendications**

1. Câble à fibres optiques imperméables à l'eau (1) à utiliser dans un système de communications, comprenant: un élément d'espacement allongé (2) comportant au moins une rainure qui se prolonge longitudinalement (4) formée dans sa surface externe; des fibres optiques (5) librement logées dans la rainure en question; une matière en forme de gelée imperméable à la vapeur d'eau, située dans la rainure en question; et un moyen (9) pour couvrir ledit élément d'espacement, caractérisé en ce que la matière en forme de gelée imperméable à la vapeur d'eau précitée remplit la rainure et revêt la surface périphérique de l'élément d'espacement précité à des intervalles prédéterminés le long de la direction longitudinale de l'élément d'espacement, de façon à former une multiplicité de parties (6) remplies de gelée qui alternent avec une multiplicié de parties (8) non remplies, et en ce que le moyen de couverture (9) convient pour recouvrir au moins la surface externe des parties remplies, sans former aucune lacune entre elles.

2. Câble à fibres optiques imperméable à l'eau suivant la revendication 1, caractérisé en ce que les parties (8) non remplies de matière en forme de gelée sont remplies d'une matière pulvérulente imperméable à la vapeur d'eau.

3. Câble à fibres optiques imperméable à l'eau suivant la revendication 1 ou 2, caractérisé en ce que l'élément d'espacement (2) précité est renforcé par un élément (voir description des figures 2 et 3) de renforcement (3) qui s'étend dans la partie centrale de l'élément d'espacement (2).

4. Câble à fibres optiques imperméable à l'eau suivant la revendication 1, 2 ou 3, caractérisé en ce que l'élément d'espacement (2) en question comporte une multiplicité de rainures (4) qui se prolongent hélicoïdalement le long de l'élément d'espacement (2).

5. Câble à fibres optiques imperméable à l'eau suivant l'une quelconque des revendications 1 à 4, caractérisé en ce que ledit moyen de couverture (9) est formé en enroulant un ruban autour de la surface extérieure de l'élément d'espacement (2) à travers les parties remplies (6) précitées.

6. Câble à fibres optiques imperméable à l'eau suivant l'une quelconque des revendications 1 à 5, caractérisé en ce que le moyen de couverture (9) est formé sur la longueur totale de l'élément d'espacement (2).

7. Câble à fibres optiques imperméable à l'eau suivant la revendication 6, caractérisé en ce que les deux faces latérales du moyen de couverture (9) sont pourvues ou garnies de la matière en forme de gelée imperméable à la vapeur d'eau.

8. Procédé de fabrication d'un câble à fibres optiques imperméables à l'eau (1) suivant la revendication 1, caractérisé en ce que l'on déplace longitudinalement un élément d'espacement allongé (2) comportant au moins une rainure s'étendant longitudinalement (4) formée dans sa surface externe; on dépose une fibre optique (5) dans la rainure en question; on remplit cette rainure et on revêt la surface périphérique de l'élément d'espacement d'une matière en forme de gelée imperméable à la vapeur d'eau, d'une manière discontinue répétitive, en synchronisme avec le mouvement de l'élément d'espacement, de façon à former une multiplicité de parties remplies de gelée, qui alternent avec une multiplicité de parties non remplies; et on recouvre au moins lesdites parties remplies de matière en forme de gelée imperméable à la vapeur d'eau.

Fig. 1

103  101

104  100

Fig. 2

5  6  4

4

1

6  4

6  4

5  5

5  2

4  9

6  10

6  3

5

Fig. 3

6  4  2

8  6  8  8  4  6  4  8

# Fig. 4

# Fig. 5